# FASCICULE DE BREVET EUROPEEN

(11) **EP 1 992 882 B1**
(45) Date de publication et mention de la délivrance du brevet: **22.12.2010**
(21) Numéro de dépôt: 08305170.6
(22) Date de dépôt: 15.05.2008
(51) Int. Cl.: F24D 19/10, F24J 3/08

(54) **Installation avec dispositif d'aiguillage de fluides pour son fonctionnement alternatif en chauffage solaire, géothermique et géosolaire**
Anlage mit einer Weichenvorrichtung für Flüssigkeiten für deren alternativen Betrieb über Solar-, geothermische und Geosolarheizung
Facility with device for switching fluids to alternate between use for solar, geothermal and geosolar heating

(30) Priorité: 15.05.2007 FR 0755079
(43) Date de publication de la demande: 19.11.2008
(73) Titulaire: Dolmazon, Roger, 43520 Le Mazet st Voy (FR); Dolmazon, Raphaël, 43520 Le Mazet st Voy (FR)
(72) Inventeur: Dolmazon, Roger, 43520 Le Mazet st Voy (FR); Dolmazon, Raphaël, 43520 Le Mazet st Voy (FR)
(74) Mandataire: Dupuis, François

(56) Documents cités:
- EP-A- 1 772 685
- FR-A- 2 487 959
- US-A- 4 062 489
- US-A- 4 165 036

## Description

L'invention se rattache au secteur technique des systèmes de chauffage géothermique, chauffage solaire, et des systèmes couplant les deux fonctionnalités.

De très nombreuses études et installations existent déjà et leur principe de fonctionnalité en utilisation simple ou couplée est connu.

On connaît le système de chauffage géothermique associé avec des pompes à chaleur. Afin que celui-ci fonctionne correctement sur plusieurs années, les capteurs sont enterrés le plus souvent à une profondeur de 80 cm afin que durant l'été, le solaire puisse restituer des calories prises au sol durant la période de chauffage de la maison. Malgré cela, il arrive que le sol s'épuise et le COP ou coefficient de performance de la pompe à chaleur baisse très sensiblement. Pour remédier à ces inconvénients, certaines installations comportent une résistance d'appoint.

Une autre solution actuellement utilisée est l'utilisation de pompe à chaleur gaz/eau ou gaz/gaz, car elles permettant de récupérer de la chaleur dans le sol même si celui-ci est gelé.

L'utilisation de chauffe-eau solaire génère comme principal problème le gaspillage de l'énergie solaire lorsque le ballon d'eau est au maximum, ou lorsque le soleil est chaud, mais pas suffisamment pour chauffer le ballon.

Il existe déjà différents procédés ou systèmes qui proposent l'utilisation combinée d'une pompe à chaleur et de l'énergie solaire. Le système décrit dans le document US 4.165.036 est très complexe à mettre en oeuvre, il utilise des panneaux solaires très spécifiques ce qui, par conséquence, rend impossible son intégration dans une installation possédant déjà les deux énergies séparées. De plus, l'utilisation d'un grand nombre de circulateurs et d'échangeurs entraîne une forte diminution du coefficient de performance de l'installation. Le système décrit dans le document US 4.062.489 s'appuie sur une pompe à chaleur spécifique qui possède un évaporateur condenseur déporté. Ce système ne permet l'utilisation du solaire en direct pour le chauffage ou l'eau chaude sanitaire. Le procédé décrit dans le document FR 2.487.959 s'appuie sur l'utilisation combinée de la géothermie sur nappe naturelle tiède et de l'énergie solaire. Ce procédé est très difficile à généraliser vu le prix d'une installation sur nappe phréatique. De plus, l'énergie solaire n'est utilisée durant la saison chaude que pour recharger la nappe phréatique, alors qu'il aurait pu fournir de l'eau chaude sanitaire. Les quatre échangeurs et les dix vannes trois voies compliquent fortement l'installation. Le dispositif décrit dans le document EP 1.772.685 est uniquement conçu pour recharger le sol lors de l'utilisation de captages horizontaux.

On connaît aussi le procédé GEOSOL qui propose l'utilisation combinée de l'énergie solaire et de la géothermie avec utilisation de capteurs solaires, échangeurs thermiques enterrés, de chauffe-eau solaire et de pompe à chaleur réversible. Ce procédé permet l'utilisation des panneaux solaires pour fournir de l'énergie à l'eau chaude sanitaire, ou au chauffage ou pour recharger le sol en chaleur. Cela requiert une installation complexe au niveau des circuits hydrauliques avec de nombreux circulateurs entraînant une diminution du coefficient de performance de l'installation et sans relation directe avec la pompe à chaleur. Par ailleurs, le procédé GEOSOL n'utilise pas au maximum l'énergie solaire, car, si lors du chauffage du bâtiment, la température des panneaux solaires est comprise entre la température de la terre et 15° C, la pompe à chaleur travaille toujours avec de l'eau à la température de la terre, ce qui réduit son coefficient de performance.

En égard des inconvénients ou limitations ci-avant exposés, la démarche du Demandeur a été de rechercher et concevoir une installation avec un dispositif d'aiguillage simple permettant d'assurer assurant les différentes fonctionnalités seules ou en combinaison de solaire, de géothermie, ou des deux combinées, en apportant une simplification de l'intégration même sur une installation existante équipée d'une pompe à chaleur eau/eau, une augmentation du coefficient de performance de la pompe à chaleur avec l'utilisation maximum de l'énergie fournie par les panneaux solaires.

Cette démarche a conduit le Demandeur à concevoir une installation propre avec une simplification des circuits hydrauliques, et surtout avec une armoire de commandes autonome permettant une régulation automatique des différentes formes de chauffage, solaire, géothermique, ou le couplage des deux dans d'excellentes conditions de productivité et d'optimisation de la pompe à chaleur, ainsi qu'un mode de stockage de l'énergie solaire dans le sol.

On connaît par le document D1 US 4165036 une installation comprenant les moyens décrits dans le préambule de la revendication 1.

L'invention est définie par la partie caractérisante de la renvendication 1.

Ces caractéristiques et d'autres encore ressortiront bien de la suite de la description.

Pour fixer l'objet de l'invention illustrée d'une manière non limitative aux figures des dessins où :

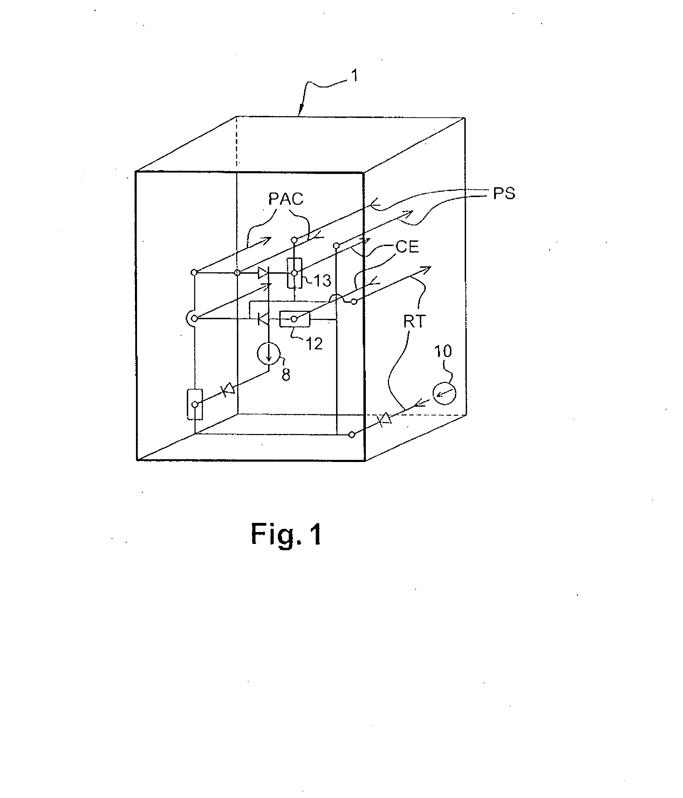

- la figure 1 est une vue à caractère schématique illustrant le dispositif d'aiguillage des fluides selon l'invention intégré dans une armoire de commandes associée à l'installation complète combinant les différents modes de chauffage solaire, géothermique et les deux, ainsi qu'un mode de stockage de l'énergie solaire dans le sol.
- la figure 2 est une vue de l'installation complète en situation de non fonctionnement.
- la figure 3 est une vue selon la figure 2 en fonctionnement géothermique seul. Le circuit non opérationnel est représenté en traits pointillés.
- la figure 4 est une vue selon la figure 2 en fonctionnement solaire seul, sans pompe à chaleur. Le circuit non opérationnel est représenté en traits pointillés.
- la figure 5 est une vue selon la figure 2 en fonctionnement combiné géothermique couplé au solaire. Le circuit non opérationnel est représenté en traits pointillés.
- la figure 6 est une vue selon la figure 2 en fonction stockage.
- les figures 7, 8, 9 et 10 sont des vues d'une variante de réalisation optimisée correspondant aux figures 3, 4, 5 et 6 dans leur situation de fonctionnement.
- la figure 11 est une vue en variante dans laquelle on utilise une pompe réversible.

Afin de rendre plus concret l'objet de l'invention, on le décrit maintenant d'une manière non limitative illustrée aux figures des dessins.

L'intégration de l'installation dans un système de chauffage comprend, selon l'invention, une armoire (1) qui est agencée intérieurement pour la réception de différents aiguillages et de moyens du type circulateurs (8-10) et vannes (11-12-13) qui sont en relation de commande avec un dispositif de régulation programmée (7), ladite armoire présentant ddes branchements hydrauliques permettant dles branchements (2) respectivement des panneaux solaires (PS) des capteurs enterrés (CE) du circuit primaire (CP) d'une pompe à chaleur (PAC) et de l'échangeur d'un ballon tampon (6). Le réservoir d'eau chaude sanitaire est référencé par (ECS).

L'invention permet une mise en oeuvre optimisée de gestion de la demande et distribution de chaleur en combinant l'L'ensemble de ces moyens, panneaux solaires, pompe à chaleur, capteurs géothermiques et ballons tampons qui seront décrits plus en détail, permet la mise en oeuvre de l'installation selon l'invention dans une version optimisée de gestion de la demande et distribution de chaleur en combinant un fonctionnement en géothermie seule, en solaire seul, en géo-solaire, etn stockage de l'énergie, les différents circuits étant alternativement mis en route en fonction de la demande de chaleur, des conditions climatiques et environnantes, et des mesures de température déterminées sur chacun des circuits, et aussi de la programmation préétablie.

Il convient dès lors d'exposer la conception de l'installation dans son ensemble. L'armoire (1), qui est installée dans un local technique accessible à l'opérateur de maintenance, comprend huit branchements principaux (2), deux (3) pour l'entrée/sortie du circuit capteur solaire (CS), deux (4) pour l'entrée/sortie du circuit capteur enterré (CE) (géothermie), deux (5) pour le circuit primaire entrée(CP) / sortie (CS) de la pompe à chaleur (PAC), et deux (6) pour le circuit entrée/sortie de l'échangeur du ballon tampon (BT) et du réservoir d'eau chaude sanitaire (ECS). Un régulateur de débit (14) en option peut être intégré entre les branchements (3) du groupe panneau solaire (PS). Un circulateur extérieur (9) est disposé sur la canalisation (30) entre le ballon tampon (BT) et le circuit secondaire (CS) de la pompe à chaleur, la canalisation (29) étant entre ces derniers également.

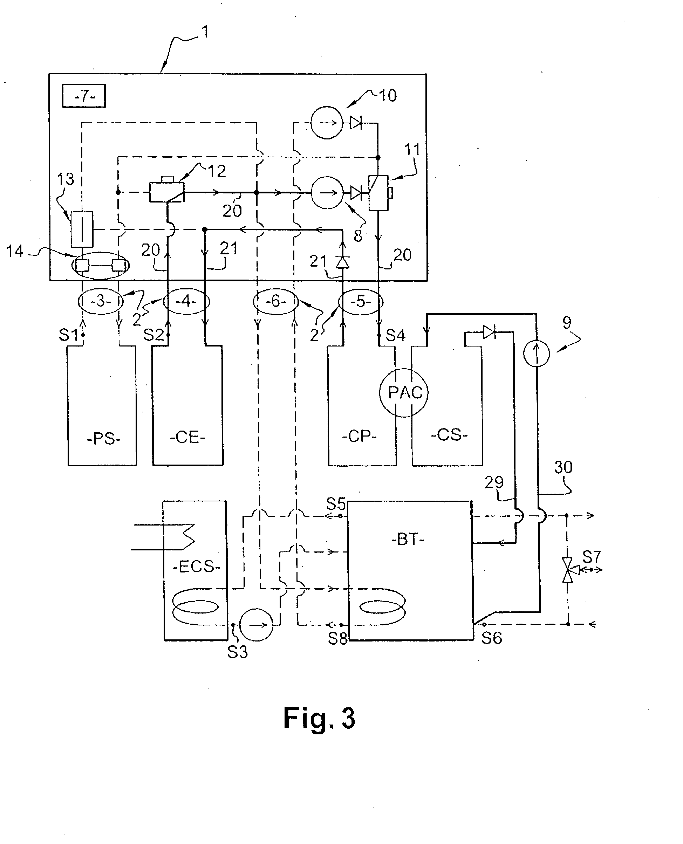

Des circuits de circulation à partir de conduits de canalisation (20-21) avant et retour selon le sens de circulation mettent ainsi en relation le ou les capteurs enterrés (CE) avec le circuit primaire (CP) de la pompe à chaleur (PAC), ainsi qu'il apparaîtra figure 3 dans le cadre du fonctionnement de l'installation en fonctionnement géothermique seul, avec donc un transit dans l'armoire (1) en intégrant un circulateur (8) et de part et d'autre de celui-ci des électrovannes (11-12). Ces dernières sont des électrovannes-directionnelles. La vanne (12) directionnelle, le circulateur (8) et la vanne (11) directionnelle sont montés successivement sur le circuit (20), tandis que le circuit (21) est libre.

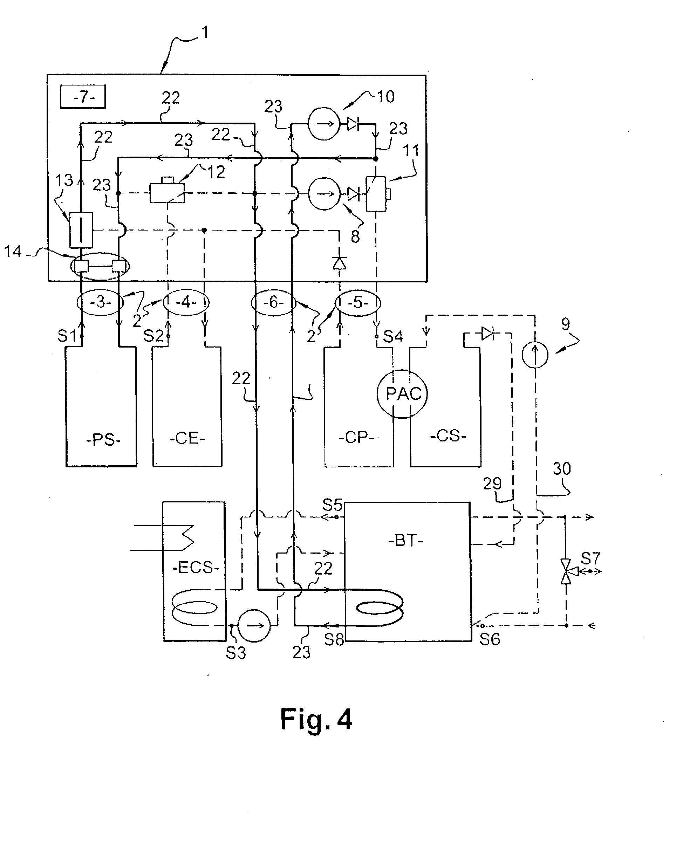

Des circuits de circulation (22-23) à partir de conduits de canalisation selon le sens de circulation mettent ainsi en relation le ou les panneaux solaires (PS) avec le ballon tampon (BT), ainsi qu'il apparaît figure 4 dans le cadre du fonctionnement de l'installation en fonctionnement solaire seul, avec donc un transit dans l'armoire (1) en intégrant un circulateur (10) et une électrovanne (13) mitigeuse. La vanne mitigeuse (13) est montée sur le circuit (22) et le circulateur (10) sur le circuit (23).

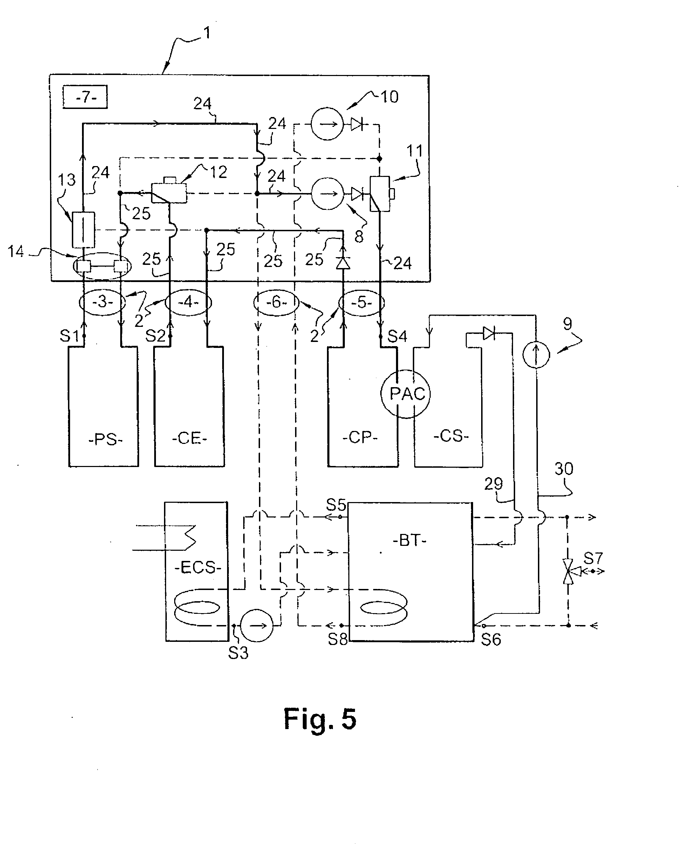

Des circuits de circulation (24-25) à partir de conduits de canalisation selon le sens de circulation mettent ainsi en relation le ou les panneaux solaires (PS), avec le ou les capteurs enterrés (CE) et le circuit primaire (CP) de la pompe à chaleur (PAC), ainsi qu'il apparaît figure 5 dans le cadre du fonctionnement de l'installation en fonction combinée géo-solaire, avec donc un transit dans l'armoire (1) en intégrant le circulateur (8) et les électrovannes (13-12-11). La vanne (13), le circulateur (8) et la vanne (11) sont successivement montés sur le circuit (24), tandis que la vanne (12) est montée en retour sur le circuit (25).

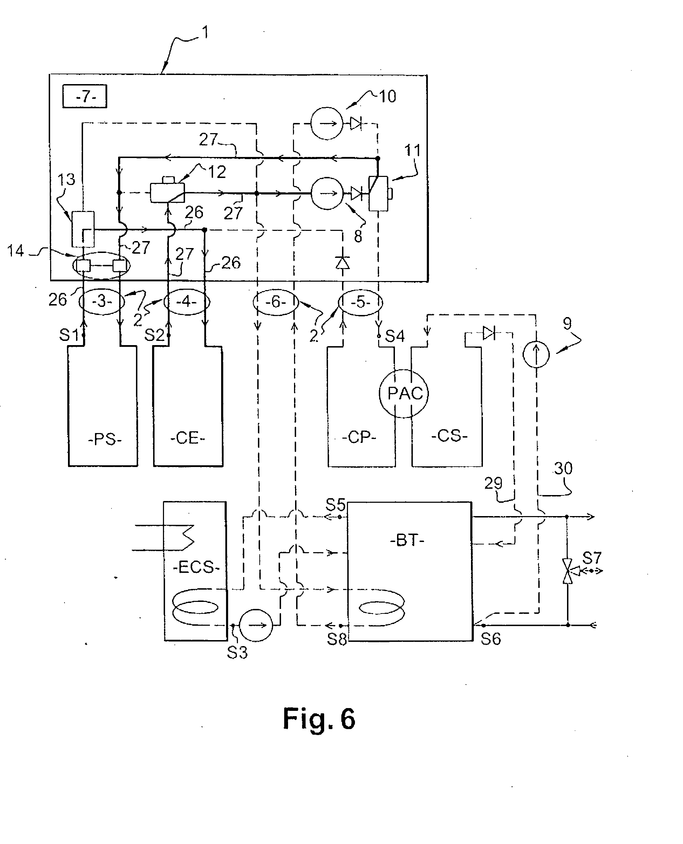

Des circuits de circulation (26-27) à partir de conduits de canalisation mettent en relation le ou les panneaux solaires (PS) avec le ou les capteurs enterrés (CE), ainsi qu'il apparaît figure 6 dans la cadre du fonctionnement stockage, avec donc un transit dans l'armoire (1) en intégrant le circulateur (8) et les électrovannes (13-12-11). La vanne (13) est montée sur le circuit (26), et la vanne (12), le circulateur (8), la vanne (11) sur le circuit en retour (27).

Tous ces moyens sont équipés de sondés identifiées comme suit : (S1) pour les panneaux solaires (PS), (S2) pour les capteurs enterrés (CE), (S3) pour le réservoir d'eau chaude sanitaire (ECS), (S4) pour le circuit primaire (CP) de la pompe à chaleur, (S5) pour le ballon tampon (BT) en position haute, (S6) pour le ballon tampon (BT) en position basse, (S7) pour le départ chauffage, (S8) pour le retour de l'échangeur du ballon tampon (BT).

Par ailleurs et de manière connue, le ballon tampon (BT) peut être en communication avec le réservoir d'eau chaude sanitaire (ECS) en intégrant des échangeurs de chaleur par le circuit (28).

L'installation complète ayant été définie avec les différents circuits propres à chaque mode de fonctionnement, géothermie seule, solaire seul, géosolaire, stockage. On expose ci-après le fonctionnement de l'installation.

L'installation et son dispositif d'aiguillage des circuits de circulation de fluides. Le dispositif de régulation programmée (7) pilote les circulateurs (8, 9, 10), les vannes (11-12-13) (14) le cas échéant, ainsi que la pompe à chaleur. D'après les différentes températures fournies par les sondes (S1, S2, S3, S4, S5, S6, S7, S8), la régulation programmée va choisir son mode de fonctionnement le plus approprié pour une utilisation optimale des différentes sources de calories fournies à partir des panneaux solaires et le ou les capteurs enterrés.

Ce dispositif de régulation programmée considère qu'il y a « demande de chaleur » dans les cas suivants :
- Cas 1 : La température (S5) de sortie du ballon tampon (BT) n'est pas supérieure d'au moins 5°C à la température (S7) demandée par le départ d'eau chaude du système de chauffage.
- Cas 2 : En période d'heure creuse, la température (S6) du ballon tampon (BT) est inférieure à la température maximale que peut fournir la pompe à chaleur actuellement entre (30° C et 70°C).

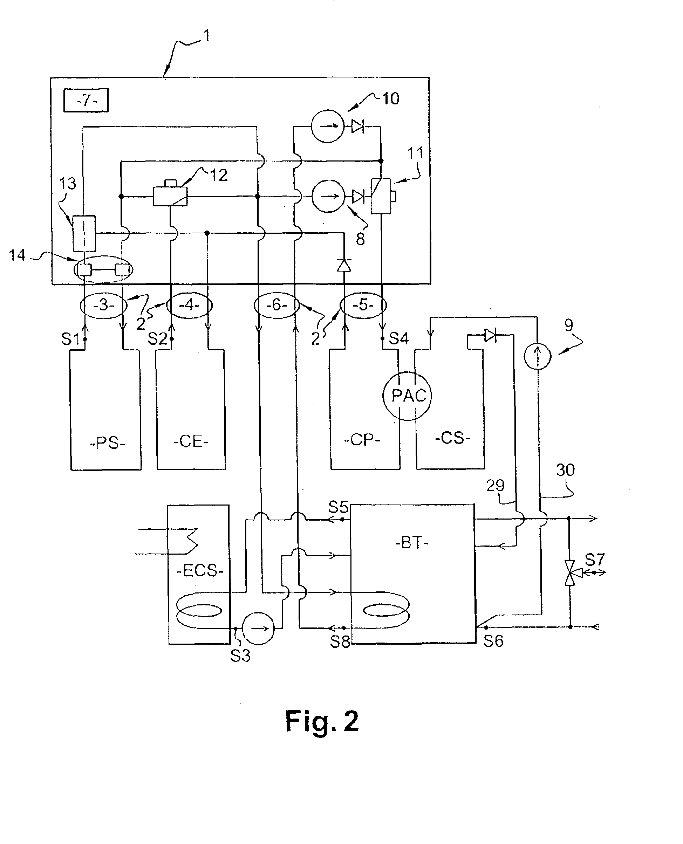

Dans la **situation arrêt,** correspondant à la figure 2, il n'y a pas de demande de chaleur et la température fournie par la sonde (S1) des panneaux solaires (PS) n'est pas supérieure d'au moins 2°C à la température fournie par la sonde (S2) de retour du ou des capteurs enterrés (CE).

Dans le **mode géothermique,** correspondant à la figure 3, la pompe à chaleur va chauffer le ballon tampon (BT) en prenant les calories dans le ou les capteurs enterrés (CE). Pour cela, il faut activer la pompe à chaleur, les vannes (12) et (11) sont passantes et le circulateur (8) fait circuler le fluide dans le circuit primaire (CP) de la pompe à chaleur (PAC) dans le même temps que le circulateur extérieur (9) fait circuler le fluide entre le ballon tampon et le circuit secondaire (CS) de la pompe à chaleur.

Ce mode est actif dans les cas suivants :
- Cas 1 : Il y a une demande de chaleur et la température fournie par la sonde (S1) des panneaux solaires n'est pas supérieure d'au moins 2°C à la température fournie par la sonde (S2) de retour du ou des capteurs enterrés.
- Cas 2 : Il y a une demande de chaleur et la température fournie par la sonde (S1) des panneaux solaires (PS) est supérieure ou égale à la température maximale que peut supporter la pompe à chaleur (PAC) sur son circuit primaire. On considère que la température maximale que la pompe à chaleur (PAC) peut supporter sur son circuit primaire est de l'ordre de 15°C à 20°C avec un coefficient de sécurité pouvant varier en fonction des modèles de pompes à chaleur sur le marché.

Dans le **mode solaire,** correspondant à la figure 4, le ballon tampon (BT) est uniquement chauffé avec les panneaux solaires (PS). Dans ce cas, il faut activer la circulation (10) pour faire circuler le fluide des panneaux solaires. La vanne (13) est passante.

Le mode est actif dans le cas suivant : la température fournie par la sonde (S1) des panneaux solaires est supérieure d'au moins 5°C à la température fournie par la sonde (S8) du ballon tampon.

Dans le **mode géo-solaire,** correspondant à la figure 5, la pompe à chaleur va chauffer le ballon tampon (BT) en prenant les calories directement dans les panneaux solaires. Pour cela, il faut activer la pompe à chaleur, le circulateur (8) fait circuler le fluide dans le circuit primaire de la pompe à chaleur et l'électrovanne (12) aiguille le fluide en sortie des capteurs enterrés (CE) dans les panneaux solaires avant que le fluide n'arrive au circuit primaire de la pompe à chaleur, la vanne (13) étant passante. Simultanément, on actionne le circulateur (9) qui fait circuler l'eau entre le ballon tampon (BT) et le circuit secondaire (CS) de la pompe à chaleur. Le régulateur de débit (14) peut être utilisé en option si l'on veut installer le dispositif dans une installation existante avec des panneaux solaires ayant en petit débit.

Le mode de fonctionnement est le suivant : il y a une demande de chaleur et la température fournie par la sonde (S1) des panneaux solaires est supérieure d'au moins 2°C à la température fournie par la sonde (S2) de retour du ou des capteurs enterrés.

Dans le **mode stockage,** correspondant à la figure 6, la chaleur des panneaux solaires est déchargée directement dans le ou les capteurs enterrés. Pour cela, le circulateur (8), l'électrovanne (11-12-13) sont passantes pour charger le fluide de la sortie des capteurs enterrés (CE) vers les panneaux solaires. La vanne mitigeuse (13) a pour fonction d'éviter un choc thermique dans les panneaux solaires. Le régulateur de débit (14) en option peut être ajouté si l'on installe le dispositif dans une installation existante avec des panneaux solaires qui ont un petit débit.

Le mode est actif dans le cas suivant :
- Cas 1 : Le ballon tampon est à sa température maximale entre 50°C et 90°C et la température établie par la sonde (S1) des panneaux solaires est supérieure d'au moins 2°C à la température établie par la sonde (S2) de retour de capteur enterré.
- Cas 2 : Il n'y a pas de demande de chaleur dans l'installation de chauffage et la température fournie par la sonde (S1) des panneaux solaires (PS) est supérieure d'au moins 2°C à la température fournie par la sonde (S2) de retour du ou des capteurs enterrés.

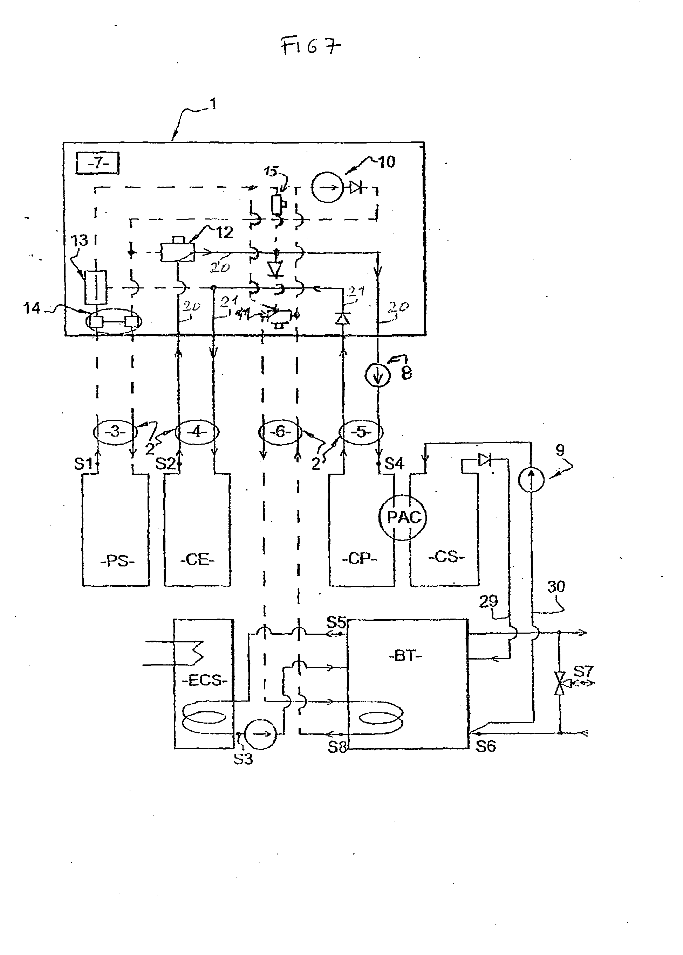

On se réfère aux figures 7 à 10 qui illustrent une variante de l'invention permettant l'utilisation de l'armoire avec tout type de pompe à chaleur eau/eau même si celle-ci possède déjà des circulateurs alors que, dans la première version, la pompe est sans circulateur ou il faut les déplacer. Les modifications sont dans l'intégration de vannes (15) complémentaires dans l'armoire et l'externalisation des circulateurs (8) de l'armoire. Les autres dispositions demeurent. La vanne (15) est intégrée dans l'armoire (1). Le circulateur (8) est monté sur le circuit (24) en étant extemalisé à l'armoire (1). La vanne (11) est monté sur le circuit (22).

Comme précédemment, on décrit les différents modes de fonctionnement en intégrant ces modifications.

L'installation et son dispositif d'aiguillage des circuits de circulation de fluides. Le dispositif de régulation programmée (7) pilote les circulateurs (10), les vannes (ii-12-13-15), ainsi que la pompe à chaleur. D'après les différentes températures fournies par les sondes (Si, 52, 53, S4, S5, S6, S7, S8), la régulation programmée va choisir son mode de fonctionnement le plus approprié pour une utilisation optimale des différentes sources de calories fournies à partir des panneaux solaires et du ou des capteurs enterrés.

Ce dispositif de régulation programmée considère qu'il y a «demande de chaleur » dans les cas suivants :
- Cas 1: La température (S5) de sortie du ballon tampon (BT) n'est pas supérieure d'au moins 5°C à la température (S7) demandée par le départ d'eau chaude du système de chauffage.
- Cas 2 : En période d'heure creuse, la température (S6) du ballon tampon (BT) est inférieure à la température maximale que peut fournir la pompe à chaleur actuellement entre (30° C et 70°C).

Dans la **situation arrêt,** correspondant à la figure 2, il n'y a pas de demande de chaleur et la température fournie par la sonde (51) des panneaux solaires (PS) n'est pas supérieure d'au moins 2°C à la température fournie par la sonde (S2) de retour du ou des capteurs enterrés (CE).

Dans le **mode géothermique,** correspondant à la figure 7, la pompe à chaleur va chauffer le ballon tampon (BT) en prenant les calories dans le ou les capteurs enterrés (CE). Pour cela, il faut activer la pompe à chaleur, les vannes (12) est passantes et le circulateur (8) fait circuler le fluide dans le circuit primaire (CP) de la pompe à chaleur (PAC) dans le même temps que
le circulateur extérieur (9) fait circuler le fluide entre le ballon tampon et le circuit secondaire (CS) de la pompe à chaleur.

Ce mode est actif dans les cas suivants :
- Cas 1 : Il y a une demande de chaleur et la température fournie par la sonde (Si) des panneaux solaires n'est pas supérieure d'au moins 2°C à la température fournie par la sonde (S2) de retour du ou des capteurs enterrés.
- Cas 2 : Il y a une demande de chaleur et la température fournie par la sonde (Si) des panneaux solaires (PS) est supérieure ou égale à la température maximale que peut supporter la pompe à chaleur (PAC) sur son circuit primaire. On considère que la température maximale que la pompe à chaleur (PAC) peut supporter sur son circuit primaire est de l'ordre de 15°C à 20°C avec un coefficient de sécurité pouvant varier en fonction des modèles de pompes à chaleur sur le marché.

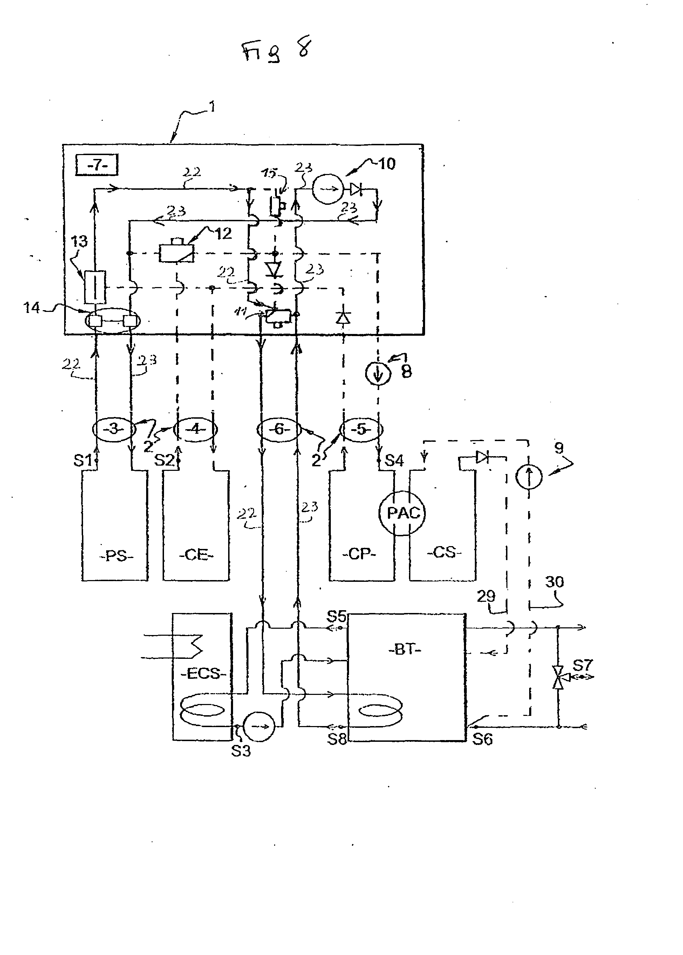

Dans le **mode solaire,** correspondant à la figure 8, le ballon tampon (BT) est uniquement chauffé avec les panneaux solaires (PS). Dans ce cas, il faut activer la circulation (i 0) pour faire circuler le fluide des panneaux solaires. Les vannes (11 & 13) sont passantes.

Le mode est actif dans le cas suivant: la température fournie par la sonde (Si) des panneaux solaires est supérieure d'au moins 5°C à la température fournie par la sonde (58) du ballon tampon.

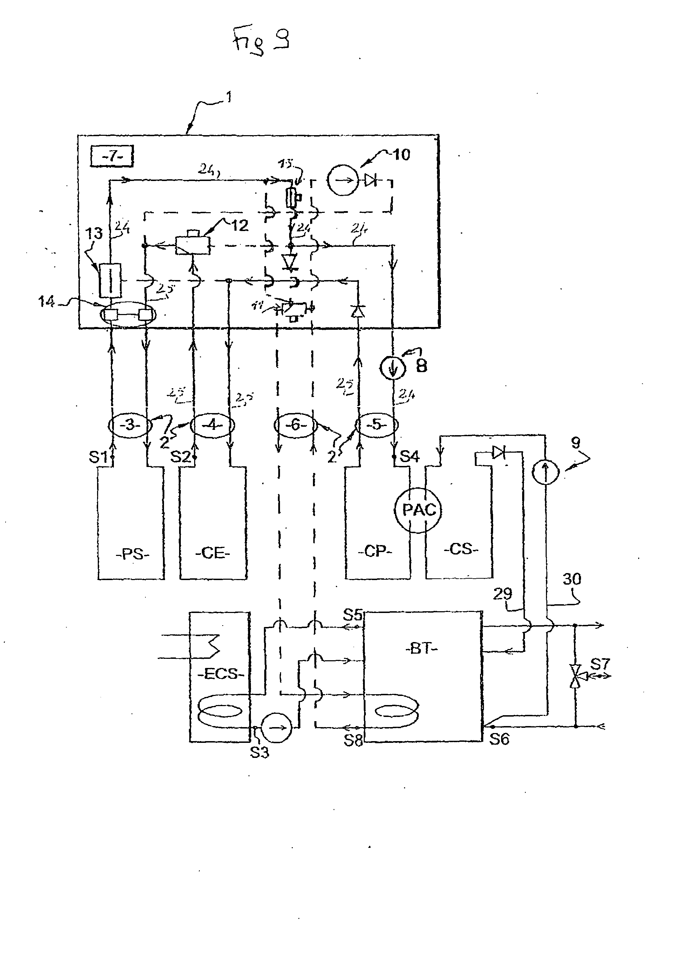

Dans le **mode géo-solaire,** correspondant à la figure 9, la pompe à chaleur va chauffer le ballon tampon (BT) en prenant les calories directement dans les panneaux solaires. Pour cela, on active la pompe à chaleur, celle-ci commande le circulateur (8) qui fait circuler le fluide dans le circuit primaire de la pompe à chaleur et le circulateur (9) qui fait circuler l'eau entre le ballon tampon (BT) et le circuit secondaire (CS). L'électrovanne (12) aiguille le fluide en sortie des capteurs enterrés (CE) dans les panneaux solaires avant que celui-ci n'arrive au circuit primaire de la pompe à chaleur, les vannes (13 & 15) sont passantes. Le régulateur de débit (14) peut être utilisé en option si l'on veut installer le dispositif dans une installation existante avec des panneaux solaires ayant en petit débit.

Le mode de fonctionnement est le suivant : il y a une demande de chaleur et la température fournie par la sonde (Si) des panneaux solaires est supérieure d'au moins 2°C à la température fournie par la sonde (S2) de retour du ou des capteurs enterrés.

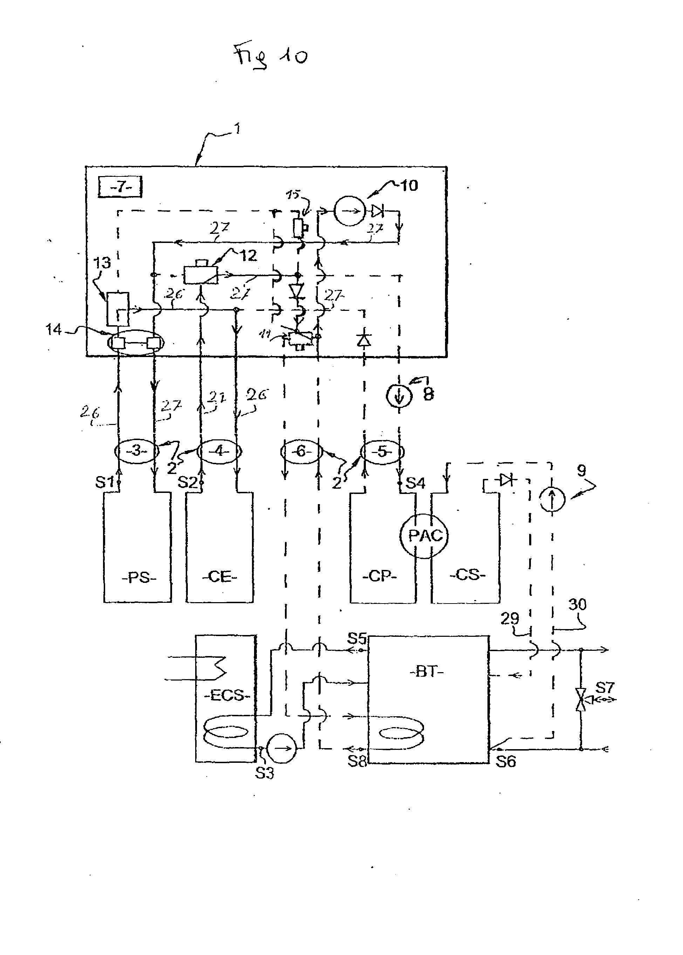

Dans le **mode stockage,** correspondant à la figure 10, la chaleur des panneaux solaires est déchargée directement dans le ou les capteurs enterrés. Pour cela, le circulateur (10), les électrovannes (11-12-13) sont passantes pour charger le fluide de la sortie des capteurs enterrés (CE) vers les panneaux solaires. La vanne mitigeuse (13) a pour fonction d'éviter un choc thermique dans les panneaux solaires. Le régulateur de débit (14) en option peut être ajouté si l'on installe le dispositif dans une installation existante avec des panneaux solaires qui ont un petit débit.

Le mode est actif dans le cas suivant :
- Cas 1 : Le ballon tampon est à sa température maximale entre 50° C et 90°C et la température établie par la sonde (S1) des panneaux solaires est supérieure d'au moins 2°C à la température établie par la sonde (S2) de retour de capteur enterré.
- Cas 2 : Il n'y a pas de demande de chaleur dans l'installation de chauffage et la température fournie par la sonde (Si) des panneaux solaires (PS) est supérieure d'au moins 2°C à la température fournie par la sonde (S2) de retour du ou des capteurs enterrés.

Les modifications ainsi apportées permettent l'utilisation de l'armoire avec tout type de pompe à chaleur eau/eau même si celle-ci possède déjà ces circulateur, avec l'ancien version il faut soit une pompe sans circulateurs soit les déplacer.

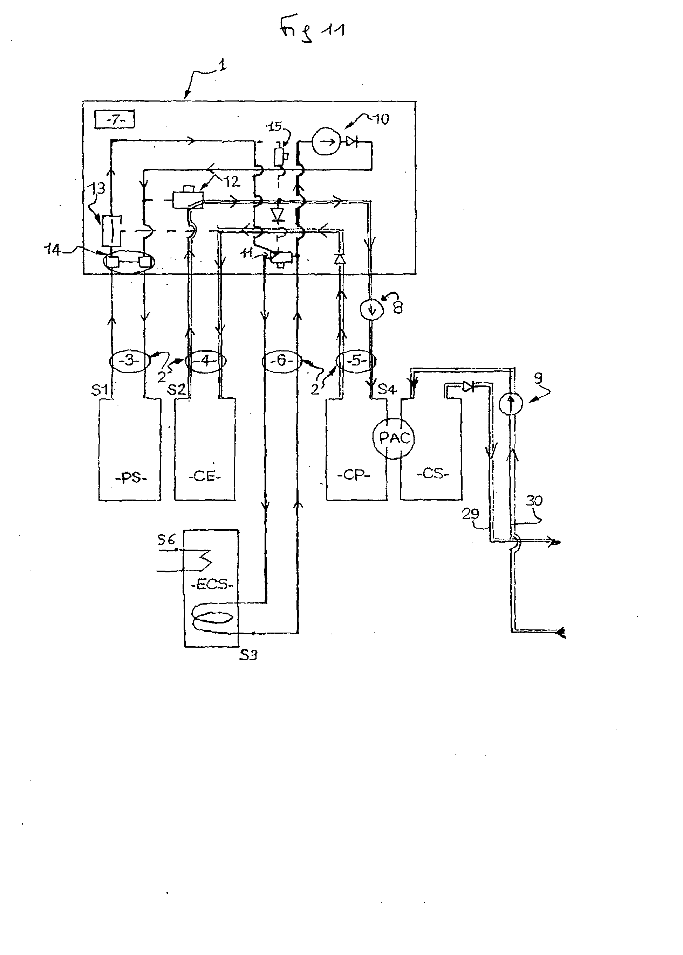

Elles permettent aussi l'utilisation de pompe réversible afin ce climatiser l'été tout en gardant la production d'eau chaude Sanitaire, comme le montre la figure 11 lors de la mise en place de l'armoire dans une installation réversible déjà existante en simple trait plein le circuit de chauffage de l'eau chaude sanitaire, en double trait plein le circuit de climatisation.

L'installation et son dispositif d'aiguillage selon l'invention présente de nombreux avantages par rapport à l'art antérieur. Le ou les capteurs enterrés (CE) sont à enfouir dans une profondeur de 2 m à 2,50 m, de sorte que le terrain récepteur est disponible.

La surface de capteur enterré peut être réduite.

La pompe à chaleur peut travailler avec un fluide tel que l'eau glycolée comprise à une température entre 0°C et 20°C avec donc un coefficient de performance nettement amélioré par rapport à l'art antérieur.

La solution permet également d'absorber l'excédent de chaleur généré par les panneaux solaires qui est alors utilisé pour recharger le ou les capteurs enterrés ou augmenter la température de l'eau qu'utilise la pompe à chaleur. L'utilisation des électrovannes directionnelles permet d'avoir une mise en service en mode géothermie ou solaire si l'une d'entre elles venait à être hors service.

La position des capteurs peut être à l'horizontal ou à la vertical, sans gêner au bon fonctionnement de l'installation. Le dispositif de l'invention est applicable sur des installations déjà existantes équipées d'une pompe à chaleur fonctionnent avec de l'eau glycolée avec l'adjonction du régulateur de débit (14) si les panneaux solaires existants ont un débit trop faibles.

La solution de l'invention apporte ainsi de très nombreux avantages et les essais qui ont été effectués par le Demandeur confirment l'excellent rendement de celle-ci par rapport à l'art antérieur.

## Revendications

1. Installation de chauffage permettant un fonctionnement alternatif en chauffage solaire, géothermique, géosolaire comprenant :
- des panneaux solaires (PS)
- des capteurs enterrés (CE)
- une pompe à chaleur (PAC)
- un ballon tampon (BT)
- un réservoir d'eau chaude sanitaire (ECS) associé à un ballon tampon (BT),
ainsi qu'un circulateur (9) entre la pompe à chaleur (PAC) et le ballon tampon (BT), et
- des sondes (51-58), disposées sur les différents moyens pour mesurer les températures correspondantes,
**caractérisée en ce qu'**elle comprend
une armoire de commande (1) comprenant des dispositifs d'aiguillage de fluide, des moyens du type circulateurs (10) et vannes (11-12-13) et un dispositif de régulation programmé (7) permettant le branchement hydraulique des panneaux solaires (PS) respectivement avec des capteurs enterrés (CE), avec le circuit primaire (CP) d'une pompe à chaleur (PAC) et avec l'échangeur d'un ballon tampon (BT),
et **en ce qu'**au moins un circulateur (9) est externalisé à ladite armoire,
et **en ce qu'**un circulateur (8) est soit intégré soit externalisé à ladite armoire,
et **en ce que** le réservoir d'eau chaude sanitaire (ECS) est extérieur à l'armoire (1),
et **en ce que** l'ensemble de ces moyens, permet la mise en oeuvre de l'installation selon l'invention dans une version optimisée de gestion de la demande et distribution de chaleur en combinant un fonctionnement en géothermie seule, en solaire seul, en géosolaire, en stockage de l'énergie, les différents circuits étant alternativement mis en route en fonction de la demande de chaleur, des conditions climatiques et environnantes, et des mesures de température déterminées sur chacun des circuits, et aussi de la programmation préétablie.

2. Installation, selon la revendication 1, **caractérisée en ce que** l'armoire comprend huit branchements principaux (2), deux (3) pour l'entrée/sortie du circuit capteur solaire (CS), deux (4) pour l'entrée/sortie du circuit capteur enterré (CE) (géothermie), deux (5) pour le circuit primaire entrée(CP) / sortie (CS) de la pompe à chaleur (PAC), et deux (6) pour le circuit entrée/sortie de l'échangeur du ballon tampon (BT) et du réservoir d'eau chaude sanitaire (ECS).

3. Installation, selon la revendication 2, **caractérisée en ce qu'**elle comprend en option un régulateur de débit (14) intégré entre les branchements (3) du groupe panneau solaire (PS).

4. Installation, selon la revendication 2, **caractérisée en ce que** les électrovannes (11) et (12) sont directionnelles et l'électrovanne (13) est mitigeuse.

5. Installation, selon la revendication 2, **caractérisée en ce qu'**elle comprend des circuits de circulation à partir de conduits de canalisation avant (20) et retour (21) selon le sens de circulation mettent ainsi en relation le ou les capteurs enterrés (CE) avec le circuit primaire (CP) de la pompe à chaleur (PAC), dans le cadre du fonctionnement de l'installation en fonctionnement géothermique seul, avec donc un transit dans l'armoire (1) en intégrant un circulateur (8) et de part et d'autre de celui-ci des électrovannes (11-12),
et **en ce que** le circulateur (8) et la vanne (11) directionnelle sont montés successivement sur le circuit avant (20), tandis que le circuit retour (21) est libre.

6. Installation, selon la revendication 2, **caractérisée en ce qu'**elle comprend des circuits de circulation avant (22) et retour (23) à partir de conduit de canalisation selon le sens de circulation mettent ainsi en relation le ou les panneaux solaires (PS) avec le ballon tampon (BT), dans le cadre du fonctionnement de l'installation en fonctionnement solaire seul, avec donc un transit dans l'armoire (1) en intégrant un circulateur (10) et une électrovanne (13) mitigeuse,
et **en ce que** la vanne mitigeuse (13) est montée sur le circuit avant (22) et le circulateur (10) sur le circuit retour (23).

7. Installation, selon la revendication 2, **caractérisée en ce qu'**elle comprend des circuits de circulation avant (24) et retour (25) à partir de conduits de canalisation selon le sens de circulation mettent ainsi en relation le ou les panneaux solaires (PS), avec le ou les capteurs enterrés (CE) et le circuit primaire (CP) de la pompe à chaleur (PAC), dans le cadre du fonctionnement de l'installation en fonction combinée géo-solaire, avec donc un transit dans l'armoire (1) en intégrant le circulateur (8) et les électrovannes (13-12-11), et **en ce que** la vanne (13), le circulateur (8) et la vanne (11) sont successivement montés sur le circuit avant (24), tandis que la vanne (12) est montée en retour sur le circuit retour (25).

8. Installation, selon la revendication 2, **caractérisée en ce qu'**elle comprend des circuits de circulation avant (26) et retour (27) à partir de conduits de canalisation mettent en relation le ou les panneaux solaires (PS) avec le ou les capteurs enterrés (CE), dans la cadre du fonctionnement stockage, avec donc un transit dans l'armoire (1) en intégrant le circulateur (8) et les électrovannes (13-12-11),
et **en ce que** la vanne (13) est montée sur le circuit avant (26), et la vanne (12), le circulateur (8), la vanne (11) sur le circuit en retour (27).

9. Installation, selon la revendication 1, **caractérisée en ce qu'**elle comprend des sondes respectivement associées (S1) pour les panneaux solaires (PS), (S2) pour les capteurs enterrés (CE), (S3) pour le réservoir d'eau chaude sanitaire (ECS), (S4) pour le circuit primaire (CP) de la pompe à chaleur, (S5) pour le ballon tampon (BT) en position haute, (S6) pour le ballon tampon (BT) en position basse, (S7) pour le départ chauffage, (S8) pour le retour de l'échangeur du ballon tampon (BT).

10. Installation, selon la revendication 2, **caractérisée en ce que** le dispositif de régulation programmée (7) pilote les circulateurs (10) des vannes (11-12-13-15) et la pompe à chaleur,
et **en ce que** ladite vanne (15) est intégrée dans l'armoire (1).

11. Installation, selon la revendication 4, **caractérisée en ce que** le circulateur (8) est monté sur le circuit avant (24)
selon le sens de circulation mettent ainsi en relation le ou les panneaux solaires (PS), avec le circuit primaire (CP) de la pompe à chaleur (PAC), dans le cadre du fonctionnement de l'installation en fonction combinée géo-solaire, le dit circulateur (8) en étant externalisé à l'armoire (1). 12- Installation, selon la revendication 4, **caractérisée en ce que** la vanne (11) est montée sur le circuit avant (22),
selon le sens de circulation mettent ainsi en relation le ou les panneaux solaires (PS) avec le ballon tampon (BT), dans le cadre du fonctionnement de l'installation en fonctionnement solaire seul.

## Claims

1. Heating system allowing alternative operation with solar, geothermal and geothermal/solar heating and comprising:
- solar panels (PS),
- buried sensors (CE),
- a heat pump (PAC),
- a surge tank (BT),
- a domestic hot water tank (ECS) associated with a surge tank (BT) as well as a circulator pump (9) between the heat pump (PAC) and the surge tank (BT) and
- probes (S1 - S8) fitted on the various means in order to measure the corresponding temperatures,
**characterised in that** it comprises
a control cabinet (1) comprising devices for switching fluids, means of the circulator pump (10) and valve (11-12-13) type and a programmed controller (7) allowing hydraulic connection of the solar panels (PS) to the buried sensors (CE), the primary circuit (CP) of a heat pump (PAC) and to the heat exchanger of a surge tank (BT) respectively,
and **in that** at least one circulator pump (9) is installed outside said cabinet, and **in that** one circulator pump (8) is either fitted inside or outside said cabinet and **in that** the domestic hot water tank (ECS) is installed outside cabinet (1),
and **in that** the totality of these means makes it possible to use the system according to the invention in a version that is optimised for demand management and heat distribution by combining geothermal operation only, solar operation only, geothermal/solar operation, energy storage, with the various circuits being alternatively started, depending on the demand for heat, climatic and ambient conditions and temperature measurements on each of the circuits and also predetermined programming,

2. System as claimed in claim 1, **characterised in that** the cabinet comprises eight main connections (2), two (3) for the input/output of the solar sensor circuit (CS), two (4) for the input/output of the buried sensor circuit (CE) (geothermal energy), two (5) for the primary circuit (CP) input/heat pump (PAC) output (CS) and two (6) for the input/output circuit of the heat exchanger of the surge tank (BT) and of the domestic hot water tank (ECS).

3. System as claimed in claim 2, **characterised in that** it optionally comprises a flow rate controller (14) fitted between the connections (3) of the solar panel assembly (PS).

4. System as claimed in claim 2, **characterised in that** solenoid valves (11) and (12) are directional and solenoid valve (13) is a mixing valve.

5. System as claimed in claim 2, **characterised in that** it comprises flow circuits based on forward (20) and return (21) pipes depending on the flow direction, thus linking the buried sensor or sensors (CE) to the primary circuit (CP) of the heat pump (PAC) in situations where the system is operating in geothermal mode only and therefore with transit through cabinet (1) by including circulator pump (8) and, either side of the latter, solenoid valves (11-12),
and **in that** circulator pump (8) and directional valve (11) are successively mounted on the forward circuit (20) whereas return circuit (21) is free.

6. System as claimed in claim 2, **characterised in that** it comprises forward (22) and return (23) flow circuits based on pipes depending on the flow direction, thus linking the solar panel(s) (PS) to the surge tank (BT) in situations where the system is operating in solar mode only and therefore with transit through cabinet (1) by including circulator pump (10) and mixing solenoid valve (13),
and **in that** mixing valve (13) is mounted on forward circuit (22) and circulator pump (10) is mounted on return circuit (23).

7. System as claimed in claim 2, **characterised in that** it comprises forward (24) and return (25) flow circuits based on pipes depending on the flow direction, thus linking the solar panel(s) (PS) to the buried sensor(s) (CE) and the primary circuit (CP) of the heat pump (PAC) in situations where the system is operating in combined geothermal and solar mode and therefore with transit through cabinet (1) by including circulator pump (8) and solenoid valves (13-12-11),
and **in that** valve (13), circulator pump (8) and valve (11) are successively mounted on forward circuit (24) whereas valve (12) is on return circuit (25).

8. System as claimed in claim 2, **characterised in that** it comprises forward (26) and return (27) flow circuits based on pipes, thus linking the solar panel(s) (PS) to the buried sensor(s) (CE) in situations where the system is operating in storage mode and therefore with transit through cabinet (1) by including circulator pump (8) and solenoid valves (13-12-11),
and **in that** valve (13) is mounted on forward circuit (26) whereas valve (12), circulator pump (8) and valve (11) are mounted on return circuit (27).

9. System as claimed in claim 1, **characterised in that** it comprises probes that are associated respectively with the solar panels (PS) (S1), the buried sensors (CE) (S2), the domestic hot water tank (ECS) (S3), the primary circuit (CP) of the heat pump (S4), the surge tank (BT) in its upper position (S5), the surge tank (BT) in its lower position (S6), the outgoing heating circuit (S7) and the return from the surge tank's (BT) heat exchanger (S8).

10. System as claimed in claim 2, **characterised in that** programmed flow rate controller (7) controls the circulator pumps (10) of valves (11-12-13-15) and the heat pump,
and **in that** said valve (15) is installed in cabinet (1),

11. System as claimed in claim 4, **characterised in that** circulator pump (8) is mounted on forward circuit (24) according to the flow direction, thus linking the solar panel(s) (PS) to the primary circuit (CP) of the heat pump (PAC) in situations where the system is operating in combined geothermal/solar mode, said circulator pump (8) being installed outside cabinet (1).

12. System as claimed in claim 4, **characterised in that** valve (11) is mounted on forward circuit (22) according to the flow direction, thus linking the solar panel(s) (PS) to the surge tank (BT) in situations where the system is operating in solar mode only

## Patentansprüche

1. Heizungsanlage für den alternativen Betrieb über Solar-, Geothermie- und Geosolarheizung, bestehend aus:
- Solarpanelen (PS),
- unterirdischen Sensoren (CE),
- einer Wärmepumpe (PAC),
- einem Pufferbehälter (BT),
- einem Brauchwasserbehälter (ECS) in Verbindung mit einem Pufferbehälter (BT) sowie einer Umlaufpumpe (9) zwischen der Wärmepumpe (PAC) und dem Pufferbehälter (BT) und
- Fühlern (S1 - S8), die an den verschiedenen Einrichtungen angeordnet sind, um die entsprechenden Temperaturen zu messen,
**dadurch gekennzeichnet, dass** sie
einen Schaltschrank (1) mit Weichenvorrichtungen für Flüssigkeiten, Einrichtungen vom Typ Umlaufpumpen (10) und Ventilen (11-12-13) und einer programmierten Regulierungsvorrichtung (7) für den hydraulischen Anschluss der Solarpanelen (PS) jeweils an die unterirdischen Sensoren (CE), an den Primärkreis (CP) einer Wärmepumpe (PAC) und an den Wärmetauscher eines Pufferbehälters (BT) umfasst,
und dass sich mindestens eine Umlaufpumpe (9) außerhalb des besagten Schrankes befindet,
und dass sich eine Umlaufpumpe (8) entweder innerhalb oder außerhalb des besagten Schrankes befindet und dass der Brauchwasserbehälter (ECS) sich außerhalb des Schrankes (1) befindet
und dass alle diese Einrichtungen die Installation der erfindungsgemäßen Anlage in einer optimierten Version für die kombinierte Steuerung der Wärmeanforderung und -verteilung nur im Geothermiebetrieb, nur im Solarbetrieb, im Geosolarbetrieb oder in der Energiespeicherung ermöglicht, wobei die einzelnen Kreisläufe abhängig von der Wärmeanforderung, den Klima- und Umweltbedingungen, den Temperaturmessungen an jedem einzelnen Kreislauf und auch von der voreingestellten Programmierung abwechselnd in Gang gesetzt werden.

2. Anlage nach Anspruch 1, **dadurch gekennzeichnet, dass** der Schrank acht Hauptanschlüsse (2) umfasst, zwei (3) für den Eingang/Ausgang des Solarsensorkreises (CS), zwei (4) für den Eingang/Ausgang des unterirdischen Sensorkreises (CE) (Geothermie), zwei (5) für den Eingang (CP) /Ausgang (CS) des Primärkreises der Wärmepumpe (PAC) und zwei (6) für den Eingangs- und Ausgangskreis des Wärmetauschers des Pufferbehälters (BT) und des Brauchwasserbehälters (ECS).

3. Anlage nach Anspruch 2, **dadurch gekennzeichnet, dass** sie als Option einen Durchflussregler (14) umfasst, der zwischen den Anschlüssen (3) des Solarpanelenaggregats (PS) eingebaut ist.

4. Anlage nach Anspruch 2, **dadurch gekennzeichnet, dass** die Elektroventile (11) und (12) direktional sind und das Elektroventil (13) ein Mischventil ist.

5. Anlage nach Anspruch 2, **dadurch gekennzeichnet, dass** sie Umwälzkreise ab Kanalisationsleitungen in Vorlauf (20) und Rücklauf (21) - je nach Umwälzrichtung - umfasst, wodurch im Rahmen des rein geothermischen Betriebs der Anlage der/die unterirdische(n) Sensor(en) (CE) mit dem Primärkreis (CP) der Wärmepumpe (PAC) in Verbindung gebracht werden, also mit einem Transit im Schaltschrank (1) unter Einbeziehung einer Umlaufpumpe (8) und von Elektroventilen (11-12) an beiden Seiten der Pumpe,
und dass die Umlaufpumpe (8) und das Richtungsventil (11) nacheinander am Vorlaufkreis (20) angebracht sind, während der Rücklaufkreis (21) frei ist.

6. Anlage nach Anspruch 2, **dadurch gekennzeichnet, dass** sie Umwälzkreise in Vorlauf (22) und Rücklauf (23) ab Kanalisationsleitungen - je nach Umwälzrichtung - umfasst, wodurch im Rahmen des rein solaren Betriebs der Anlage die Solarpanele(n) (PS) mit dem Pufferbehälter (BT) in Verbindung gebracht werden, also mit einem Transit im Schaltschrank (1) unter Einbeziehung einer Umlaufpumpe (10) und eines Mischelektroventils (13),
und dass das Mischelektroventil (13) am Vorlaufkreis (22) und die Umlaufpumpe (10) am Rücklaufkreis (23) angebracht ist.

7. Anlage nach Anspruch 2, **dadurch gekennzeichnet, dass** sie Umwälzkreise in Vorlauf (24) und Rücklauf (25) ab Kanalisationsleitungen - je nach Umwälzrichtung - umfasst, wodurch im Rahmen des kombinierten geo-solaren Betriebs der Anlage die Solarpanele(n) (PS) mit dem/den unterirdischen Sensor(en) (CE) und dem Primärkreis (CP) der Wärmepumpe (PAC) in Verbindung gebracht werden, also mit einem Transit im Schaltschrank (1) unter Einbeziehung der Umlaufpumpe (8) und der Elektroventile (13-12-11),
und dass das Ventil (13), die Umlaufpumpe (8) und das Ventil (11) nacheinander am Vorlaufkreis (24) angebracht sind, während das Ventil (12) am Rücklaufkreis (25) angebracht ist.

8. Anlage nach Anspruch 2, **dadurch gekennzeichnet, dass** sie Umwälzkreise in Vorlauf (26) und Rücklauf (27) ab Kanalisationsleitungen umfasst, wodurch im Rahmen des Speicherbetriebs der Anlage die Solarpanele(n) (PS) mit dem/den unterirdischen Sensor(en) (CE) in Verbindung gebracht werden, also mit einem Transit im Schaltschrank (1) unter Einbeziehung der Umlaufpumpe (8) und der Elektroventile (13-12-11), und dass das Ventil (13) am Vorlaufkreis (26) und das Ventil (12), die Umlaufpumpe (8) und das Ventil (11) am Rücklaufkreis (27) angebracht sind.

9. Anlage nach Anspruch 1, **dadurch gekennzeichnet, dass** sie Fühler umfasst, die jeweils (S1) mit den Solarpanelen (PS), (S2) mit den unterirdischen Sensoren (CE), (S3) mit dem Brauchwasserbehälter (ECS), (S4) mit dem Primärkreis (CP) der Wärmepumpe, (S5) mit dem Pufferbehälter (BT) in oberer Stellung, (S6) mit dem Pufferbehälter (BT) in unterer Stellung, (S7) mit dem Heizungsabgang, (S8) mit der Rückleitung des Wärmetauschers des Pufferbehälters (BT) gekoppelt sind.

10. Anlage nach Anspruch 2, **dadurch gekennzeichnet, dass** die programmierte Regulierungsvorrichtung (7) die Umlaufpumpen (10) der Ventile (11-12-13-15) und die Wärmepumpe steuert,
und dass das besagte Ventil (15) in den Schrank (1) integriert ist.

11. Anlage nach Anspruch 4, **dadurch gekennzeichnet, dass** die Umlaufpumpe (8) in Umlaufrichtung am Vorlaufkreis (24) angebracht ist, wodurch im kombinierten geo-solaren Betrieb der Anlage die Solarpanele(n) (PS) mit dem Primärkreis (CP) der Wärmepumpe (PAC) in Verbindung gebracht werden, wobei sich die Umlaufpumpe (8) außerhalb des Schranks (1) befindet.

12. Anlage nach Anspruch 4, **dadurch gekennzeichnet, dass** das Ventil (11) in Umlaufrichtung am Vorlaufkreis (22) angebracht ist, wodurch die Solarpanele(n) (PS) im Rahmen des rein solaren Betriebs der Anlage mit dem Pufferbehälter (BT) in Verbindung gebracht werden.
